Europäisches Patentamt

European Patent Office

Office européen des brevets

(19)

(11) Veröffentlichungsnummer: **0 356 890**
**A2**

(12) **EUROPÄISCHE PATENTANMELDUNG**

(21) Anmeldenummer: 89115507.9

(51) Int. Cl.5: **G02B 27/30**

(22) Anmeldetag: 23.08.89

(30) Priorität: 01.09.88 DE 3829707

(43) Veröffentlichungstag der Anmeldung:
07.03.90 Patentblatt 90/10

(84) Benannte Vertragsstaaten:
**AT BE CH DE FR GB IT LI NL SE**

(71) Anmelder: **Firma Carl Zeiss**

**D-7920 Heidenheim (Brenz)(DE)**
(84) **BE CH DE FR IT LI NL SE AT**

Anmelder: **CARL-ZEISS-STIFTUNG trading as
CARL ZEISS**

**D-7920 Heidenheim (Brenz)(DE)**
(84) **GB**

(72) Erfinder: **Stana, Hans**
**Weingartenstrasse 59**
**D-7082 Oberkochen(DE)**
Erfinder: **Renner, Werner**
**Rembrandtweg 26**
**D-7920 Heidenheim(DE)**

(54) · **Vorrichtung zur Erzeugung eines optischen Zielstrahles.**

(57) Vorrichtung zur Erzeugung eines optischen Zielstrahles zur Prüfung von langen Führungen. In einem Gehäuse ist formschlüssig ein Kollimator zur Abbildung einer Strichmarke nach Unendlich gelagert. Der Kollimator ist als Spiegelsystem ausgebildet, das aus mehreren, fest miteinander verbundenen Komponenten besteht. Diese bilden einen, mit einem gasförmigen Medium gefüllten Raum, in dem der Abbildungsstrahlengang verläuft. Der Kollimator gewahrleistet auch bei extremen mechanischen und thermischen Beanspruchungen eine einwandfreie Funktion und ist vor allem auch unempfindlich gegenüber Temperaturänderungen.

Fig.1

## Vorrichtung zur Erzeugung eines optischen Zielstrahles

Die vorliegende Erfindung betrifft eine Vorrichtung zur Erzeugung eines optischen Zielstrahles, der mit einer, diese Vorrichtung tragenden Unterlage auch bei extremer mechanischer und thermischer Beanspruchung einen definierten Winkel bildet.

Solche Vorrichtungen finden beispielsweise Verwendung zur Prüfung langer Führungen bei Werkzeugmaschinen und zur Ermittlung von Winkelabweichungen zwischen den Achsen von Teilen großer Maschinen. Die Vorrichtung dient hier als Justierkollimator, dessen Zielstrahl über ein entsprechend ausgebildetes Fernrohr beobachtet wird. Ist die vom Justierkollimator nach Unendlich abgebildete Zielmarke so gestaltet, daß sie eine Zielmarke im Fernrohr zu einer symmetrischen Figur ergänzt, so lassen sich Abweichungen, die beim rauhen Betrieb auftreten leicht erkennen und bei entsprechender Kalibrierung auch messen. Hier können je nach Maschinentyp extreme mechanische und auch thermische Beanspruchungen des Justierkollimators auftreten.

Eine weitere vorzugsweise Anwendung finden solche Vorrichtungen um die Raumlage der Mündung eines Geschützrohres zu überwachen. Dabei wird die Vorrichtung in der Nähe der Mündung des Geschützrohres angebracht und der von der Vorrichtung ausgestrahlte Zielstrahl gelangt zu einem Zielgerät. Die Ziellinie dieses Gerätes erhält beim Justieren einen genau vorbestimmten Winkel zur Achse des kalten Geschützrohres. Zu diesem Zweck wird in das Geschützrohr eine Justiereinrichtung eingeführt, wie sie beispielsweise in der DE-A 1 257 039 beschrieben ist. Nach erfolgter Justierung erreicht der entgegen der Geschoßrichtung verlaufende Zielstrahl der Vorrichtung, die hier wieder als Justierkollimator verwendet wird, eine bestimmte Lage im Zielgerät.

Das Geschützrohr wird durch das Abfeuern der Geschosse heiß und kann sich dabei verbiegen, so daß die Achse des Mündungsbereiches, welche die Fluchtrichtung des Geschosses bestimmt in ihrer Raumlage verändert wird. Dies äußert sich in einer Abweichung des Kollimator-Zielstrahles von seiner Sollposition, so daß das Zielgerät entsprechend nachjustiert werden kann. Danach nimmt sein Zielstrahl wieder die richtige Position bezüglich der Achse der Rohrmündung ein.

Es ist ohne weiteres verständlich, daß bei dieser Anwendung die mechanische und die thermische Beanspruchung des Justierkollimators besonders groß ist. So treten im Mündungsbereich des Geschützrohres Kräfte auf, die 40.000 g noch überschreiten können.

Aus der EP-B 124 631 ist eine Vorrichtung der geschilderten Art bekannt, bei der in einem form- und kraftschlüssig mit der Unterlage verbundenen Metallgehäuse ein einlinsiges Objektiv angeordnet ist, dessen eine optisch wirksame Fläche eine beleuchtete Zielmarke trägt, dessen gegenüberliegende Fläche in ihrem Zentralbereich vollverspiegelt ist und das aus einem transparenten Material mit einem linearen Ausdehnungskoeffizienten $< 10^{-6} \cdot K^{-1}$ besteht und das über eine seine Umfangsfläche umgebende Schicht aus dauerelastischem Material formschlüssig im Gehäuse gelagert ist.

Diese Vorrichtung erfüllt alle, aus extremen mechanischen und thermischen Beanspruchungen resultierenden Forderungen nach Stabilität und Sicherung des Justierzustandes.

Es hat sich jedoch gezeigt, daß Temperaturwechsel zu einer Verschlechterung der Abbildungsqualität des Justierkollimators führen, die bei hohen Werten der Temperaturdifferenz störend in Erscheinung tritt.

Dieser Effekt ist darauf zurückzuführen, daß bei der bekannten Vorrichtung der eigentliche Abbildungsstrahlengang im Kollimator innerhalb eines kompakten optischen Mediums verläuft, dessen Brechkraft sich in Abhängigkeit von seiner Temperatur ändert. Dadurch verursacht treten bei örtlich ungleicher Temperatur im optischen Medium Inhomogenitäten im optisch wirksamen Teil des Kollimators auf, welche die Abbildungsqualität verschlechtern. Solche örtlich ungleichen Temperaturen im optischen Medium werden hervorgerufen, da dieses zwar einen extrem kleinen linearen Ausdehnungskoeffizienten, aber auch eine relativ geringe Wärmeleitfähigkeit hat. Deshalb stellt sich bei einer Temperaturänderung der Unterlage, mit der die Vorrichtung verbunden ist eine gleichmäßige Temperatur im optischen Medium des Kollimators nur verzögert ein.

Es ist ohne weiteres einsichtig, daß eine Verschlechterung der Abbildungsqualität besonders dann auftritt, wenn die Vorrichtung im Mündungsbereich eines Geschützrohres angeordnet ist.

Es ist nun die Aufgabe der vorliegenden Erfindung eine Vorrichtung nach dem Oberbegriff des Anspruchs 1 so auszugestalten, daß sie auch bei schnellen und großen Temperaturwechseln eine einwandfreie Abbildungsqualität des Kollimators gewährleistet.

Die Lösung dieser Aufgabe erfolgt mit einer Vorrichtung, welche gemäß den kennzeichnenden Merkmalen des Patentanspruchs 1 ausgebildet ist.

Bei der Vorrichtung nach der Erfindung verläuft also der Abbildungsstrahlengang in einem Raum, der mit einem gasförmigen Medium gefüllt ist. Dieses gasförmige Medium kann vorzugsweise Luft sein. Ein gasförmiges Medium ändert seine Brechzahl in Abhängigkeit von der Temperatur nur außerordentlich wenig. Außerdem besitzt es eine relativ gute Wärmeleitfähigkeit und eine hohe Lichtdurchlässigkeit. Aus diesem Grunde beeinflußt das gasförmige Medium den optisch wirksamen Teil des Abbildungsstrahlenganges auch bei Temperaturänderungen nicht merkbar.

Die Abbildung der Strichmarke nach Unendlich erfolgt bei der Vorrichtung nach der Erfindung mit Hilfe eines Spiegelsystems. Um mit einem solchen System eine einwandfreie Abbildung zu erreichen genügt es, wenn die Systemkomponenten die Bedingungen erfüllen, daß sie eine außerordentlich geringe Wärmeausdehung haben. Solche Elemente bestehen deshalb vorzugsweise aus Keramik, beispielsweise aus der unter dem Handelsnamen Zerodur erhältlichen Glaskeramik.

Eine besonders vorteilhafte Ausbildung des Spiegelsystems ist in Anspruch 2 angegeben. Bei diesem System dient die planparallele Platte neben der Reflexion auch zum Austritt des Abbildungsstrahlenganges aus dem Spiegelsystem. Da die Dicke dieser Platte, bezogen auf die Gesamtlänge des Strahlenganges klein ist, ist sie bezüglich temperaturbedingter Brechzahländerungen unkritisch.

Die Ansprüche 3 bis 5 beziehen sich auf zweckmäßige Ausgestaltungen einer, die Strichmarke tragenden Komponente. Anspruch 6 beschreibt die Anordung einer Lichtquelle zum Beleuchten der Strichmarke.

Die Erfindung wird im folgenden anhand der Figuren 1-4 der beigefügten Zeichnungen näher erläutert. Dabei zeigen:

Fig. 1 einen Längsschnitt durch ein Ausführungsbeispiel einer Vorrichtung der Erfindung;

Fig. 2 ein anderes Ausführungsbeispiel des in der Vorrichtung der Fig. 1 enthaltenen Justierkollimators;

Fig. 3 einen Teilschnitt durch den Hohlspiegel des Justierkollimators zur Darstellung einer von Fig. 2 abweichenden Ausgestaltung der die Strichmarke tragenden Komponente;

Fig. 4 eine, der Fig. 3 entsprechende Darstellung einer weiteren Ausführungsform der die Strichmarke tragenden Komponente.

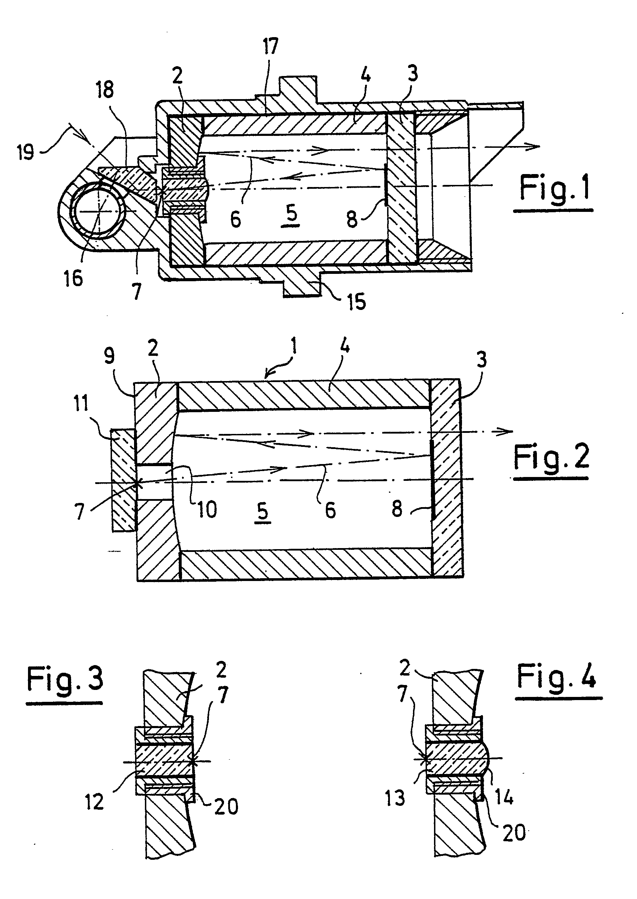

In Fig. 1 ist mit (15) ein Gehäuse, vorzugsweise ein Metallgehäuse bezeichnet, das form- und kraftschlüssig mit einer Unterlage verbunden ist. Diese Unterlage kann beispielsweise ein Geschützrohr sein. Die Befestigung selbst kann auf verschiedene Arten erfolgen, beispielsweise so wie es in der EP-B 124 631 gezeigt ist. In dem Gehäuse (15) ist der eigentliche Justierkollimator (1) formschlüssig gelagert und zwar über dauerelastische Mittel (17).

Der Justierkollimator (1) besteht aus einem Hohlspiegel (2), in dessen Brennpunkt eine Strichmarke (7) angeordnet ist. Im Abstand der halben Brennweite steht dem Spiegel (2) eine planparallele Platte (3) gegenüber, deren Zentralbereich (8) vollverspiegelt ist. Der nichtverspiegelte Bereich der Planplatte (3) dient zum Austritt des Abbildungsstrahlenganges (6). Eine zylinderringförmige Komponente (4) legt den Abstand zwischen Spiegel (2) und Platte (3) fest und bildet zusammen mit diesen beiden Komponenten eine Einheit. Zu diesem Zweck sind die Komponenten (2,3 und 4) über geeignete Mittel beispielsweise mittels eines Klebers miteinander verbunden.

Zwischen den Komponenten (2,3,4) ist damit ein Hohlraum (5) gebildet, der mit einem Gas, zweckmäßig mit Luft gefüllt ist und in dem der Abbildungsstrahlengang (6) verläuft.

Im Gehäuse (15) selbst ist eine Lichtquelle (16) angeordnet, welche zur Beleuchtung der Strichmarke (7) dient. Dazu wird das von der Lichtquelle (16) austretende Licht über ein prismatisches Element (18) zur Strichplatte (7) hin umgelenkt. Das prismatische Element (18) ist so ausgebildet, daß auch Tageslicht zur Beleuchtung der Strichmarke (7) dienen kann, wie dies durch den Pfeil (19) angedeutet ist.

Bei dem in Fig. 2 dargestellten Ausführungsbeispiel des Justierkollimators (1) ist der Hohlspiegel (2) mit einer planen Rückfläche (9) versehen und trägt in seinem mittigen Bereich eine Bohrung (10). Auf die Rückfläche (9) des Spiegels (2) ist eine transparente Platte (11) aufgebracht und fest mit dem Spiegel (2) verbunden. Diese Platte (11) trägt im Brennpunkt des Hohlspiegels (2) die Strichmarke (7). Zur Beleuchtung dieser Strichmarke kann, entsprechend Fig. 1 sowohl eine gesonderte Lichtquelle (16) als auch Tageslicht (19) dienen.

In der Ausführungsform der Fig. 3 ist in der Bohrung (10) des Hohlspiegels (2) ein transparentes Element (12) angeordnet, welches die Strichmarke (7) trägt. Dieses transparente Element (12) kann zur Erleichterung der Justierung in Richtung der optischen Achse des Spiegels (2) verschoben werden und wird nach erfolgter Justierung mittels des Schraubelementes (20) festgeklemmt und in der Justierlage gesichert.

Bei der in Fig. 4 dargestellten Ausführungsform ist in der Bohrung (10) des Hohlspiegels (2) ein transparentes Element 13) angeordnet, welches die Strichplatte (7) trägt und eine optisch wirksame Fläche (14) aufweist. Die Verwendung eines solchen Elementes erleichtert die Justierung. Die in Fig. 4 gezeigte Ausführungsform ist im Ausführungsbeispiel der Fig. 1 verwendet.

Bei dem in den Figuren dargestellten Justierkollimator müssen nur die Elemente (11,12,13,18 und 3) lichtdurchlässig sein. Wenn diese Elemente thermisch bedingte Inhomogenitäten aufweisen, ist dies für die Qualität des Abbildungsstrahlenganges nicht von Bedeutung. Dies ist bezüglich des Beleuchtungsteiles ohne weiteres verständlich, bezüglich der zum Strahlaustritt dienenden planparallelen Platte (3) kommt diese Unempfindlichkeit dadurch zustande, da ihre Dicke bezogen auf die restliche Länge des Strahlenganges (6) klein ist.

Die Komponenten (2 und 4) können im Prinzip aus strahlenundurchlässigem Material, beispielsweise aus Keramik gefertigt sein. Die bezüglich ihrer Transparenz beanspruchten Komponenten sind zweckmäßig aus der Glaskeramik Zerodur gefertigt.

**Ansprüche**

1. Vorrichtung zur Erzeugung eines optischen Zielstrahles, die mit einer diese Vorrichtung tragenden Unterlage auch bei extremer mechanischer und thermischer Beanspruchung einen definierten Winkel bildet, bestehend aus einem kraftschlüssig mit der Unterlage verbundenen Gehäuse und einem mittels dauerelastischer Mittel formschlüssig in diesem Gehäuse gelagerten Kollimator zur Abbildung einer Strichmarke nach Unendlich, dadurch gekennzeichnet, daß der Kollimator (1) als Spiegelsystem mit mindestens einem abbildenden Hohlspiegel (2) ausgebildet ist und aus Komponenten (2,3,4) besteht, die zu einer kompakten Einheit verbunden sind und die aus einem Werkstoff mit einem linearen Ausdehnungskoeffizienten $<10^{-6}$. $K^{-1}$ bestehen, und daß diese Komponenten einen mit einem gasförmigen Medium gefüllten Raum (5) bilden, in dem der Abbildungsstrahlengang (6) des Spiegelsystems verläuft.

2. Vorrichtung nach Anspruch 1, dadurch gekennzeichnet, daß der Kollimator (1) aus einem Hohlspiegel (2) besteht, in dessen Brennpunkt die Strichmarke (7) angeordnet ist und dem im Abstand der halben Brennweite, eine in ihrem Zentralbereich (8) vollverspiegelte planparellele Platte (3) gegenübersteht, deren nicht-verspiegelter Bereich zum Strahlaustritt dient, und daß Hohlspiegel (2) und Planplatte (3) über eine ihren Abstand festlegende zylinderringförmige Komponente (4) zu einer kompakten Einheit verbunden sind.

3. Vorrichtung nach Anspruch 2, dadurch gekennzeichnet, daß der Hohlspiegel (2) des Kollimators zentral durchbohrt und mit einer planen Rückfläche (9) versehen ist, und daß im Bereich der Bohrung (10) eine transparente Platte (11) fest mit der Rückfläche (9) des Spiegels verbunden ist, die in der optischen Achse des Hohlspiegels (2) die Strichmarke (7) trägt.

4. Vorrichtung nach Anspruch 2, dadurch gekennzeichnet, daß der Hohlspiegel (2) des Kollimators (1) zentral durchbohrt ist, und daß in dieser Bohrung (10) ein transparentes Element (12,13) fest angeordnet ist, das in der optischen Achse des Hohlspiegels (2) die Strichmarke (7) trägt.

5. Vorrichtung nach Anspruch 4, dadurch gekennzeichnet, daß das transparente Element (13) mindestens eine optisch wirksame Fläche (14) aufweist.

6. Vorrichtung nach Anspruch 1 und 2 und einem der Ansprüche 3-5, dadurch gekennzeichnet, daß das den Kollimator aufnehmende Gehäuse (15) eine Lichtquelle (16) zur Beleuchtung der Strichmarke enthält.

Fig.1

Fig.2

Fig.3

Fig.4